# FASCICULE DE BREVET EUROPEEN

(11) **EP 1 908 148 B1**
(45) Date de publication et mention de la délivrance du brevet: **01.08.2012**
(21) Numéro de dépôt: 06777888.6
(22) Date de dépôt: 21.07.2006
(51) Int. Cl.: H01R 13/187, H01R 13/629

(54) **CONTACT ELECTRIQUE ENTRE APPAREILS HAUTE OU MOYENNE TENSION, ADAPTE POUR UN ROTULAGE**
ELEKTRISCHER KONTAKT ZWISCHEN HOCH- ODER MITTELSPANNUNGSVORRICHTUNGEN MIT DREHBARKEIT
ELECTRICAL CONTACT BETWEEN HIGH OR MEDIUM VOLTAGE APPARATUSES THAT IS CAPABLE OF SWIVELING

(30) Priorité: 22.07.2005 FR 0552280
(43) Date de publication de la demande: 09.04.2008
(73) Titulaire: ALSTOM Technology Ltd, 5400 Baden (CH)
(72) Inventeur: ARNAUD, Alain, F-73100 Aix Les Bains (FR); ROULET, Jean-Pierre, F-73370 Le Bourget Du Lac (FR); BERALS, Jean-Michel, F-73100 Aix Les Bains (FR)
(74) Mandataire: Poulin, Gérard
(86) Numéro de dépôt international: PCT/EP2006/064512
(87) Numéro de publication internationale: WO 2007/010038

(56) Documents cités:
- EP-A- 1 119 077
- US-A- 3 086 190
- US-A- 4 111 511

## Description

### DOMAINE TECHNIQUE

L'invention se rapporte au domaine de la connexion entre des appareils électriques. Ce type de connexion entre appareils électriques est telle que le contact électrique est permanent à l'exception des opérations de montage ou de maintenance, et que l'emboîtement est semi fixe.

Plus particulièrement, l'invention concerne la possibilité d'opérer un emboîtement assurant les fonctions électrique et mécanique entre deux parties mobiles relativement d'un bloc de contact, bien que les deux parties ne soient délibérément pas ajustées, de sorte qu'il est possible de les incliner l'une par rapport à l'autre.

L'invention trouve une application particulière pour les appareils électriques à haute ou moyenne tension ; elle permet de diminuer les coûts lors des opérations de montage/démontage.

### ÉTAT DE L'ART ANTÉRIEUR

Pour la transmission de courant entre des appareillages de haute ou moyenne tension, des blocs de contact comprennent usuellement deux parties mobiles l'une par rapport à l'autre et connectées à différents éléments de l'appareillage afin d'assurer la transmission du courant électrique. La mobilité entre les deux parties n'est utilisée que pour les opérations de montage et démontage.

Classiquement, comme illustré par exemple dans FR 2 810 463, une première partie, par exemple une barre munie d'un contact électrique à au moins une extrémité, est mobile en translation pour être connectée à un contact fixe, comprenant habituellement un évidement cylindrique dans lequel la barre s'insère pour être maintenue en position. L'emboîtement de la barre dans le contact fixe du bloc de contact assure ainsi la connexion électrique et le maintien mécanique. De fait, les barres, rigides, pouvant être très lourdes, par exemple de l'ordre d'une centaines de kilogrammes, la charge mécanique exercée sur le contact fixe est importante.

Idéalement, les parties mobile et fixe sont parfaitement coaxiales et ajustées pour assurer le meilleur contact électrique possible lorsque les appareils sont assemblés, c'est-à-dire que la barre est emboîtée dans le contact fixe. Mais un désalignement est possible entre les appareils assemblés entre eux, et un jeu entre les deux parties peut être préconisé.

Par ailleurs, pour permettre le montage et le démontage des appareils d'un poste moyenne ou haute tension sous enveloppes métalliques, des liaisons démontables apparaissent nécessaires entre ces appareils. Ces liaisons sont généralement constituées d'une virole télescopique et d'une barre démontable : le démontage de la virole télescopique et de sa barre crée un espace entre les appareils, qui permet leur déconnexion.

Le document US - A - 3086190 décrit dans son mode de réalisation de la figure 5 un bloc de contact 57 à l'intérieur d'un appareil de forte puissance.

### EXPOSÉ DE L'INVENTION

L'invention propose, parmi autres avantages, de pallier les inconvénients décrits ci-dessus, et de permettre notamment une inclinaison entre le contact fixe et le contact mobile, c'est-à-dire entre la barre et l'évidement de contact. Selon l'invention, cette possibilité de « rotulage » est exploitée lors des opérations de montage/démontage, pendant lesquelles il est possible d'incliner la barre de connexion par rapport à l'axe du contact fixe, permettant par là l'omission d'éléments télescopiques et de barres démontables.

L'invention concerne un dispositif de connexion électrique caractérisé en ce qu'il comprend deux blocs de contact électrique haute et/ou moyenne tension, chaque bloc de contact comprenant une première partie tubulaire s'étendant le long d'un premier axe, une deuxième partie comprenant un évidement cylindrique autour d'un deuxième axe tel que la première partie peut s'insérer dans l'évidement, et des moyens de connexion mobile entre les première et deuxième parties adaptés pour, lorsque la première partie est insérée dans l'évidement, permettre une inclinaison d'un angle α entre les premier et deuxième axes tout autour du deuxième axe et assurer un contact entre les première et deuxième parties, la première partie tubulaire du premier et du deuxième blocs étant une même barre.

L'invention permet ainsi d'avoir simultanément un contact électrique performant dans un encombrement réduit et une possibilité d'inclinaison entre la barre conductrice de courant et le contact fixe. Grâce à l'invention, un contact électrique « performant » peut être obtenu dans un encombrement réduit : ce type de contact est en particulier adapté au minimum pour un courant permanent compris entre 2000 et 6300 A, en particulier supérieur à 4000 A, et un courant de court-circuit de 31,5 à 63 kA pendant 3 s.

Plus généralement, l'invention se rapporte à une connexion de deux parties s'emboîtant et mobiles l'une par rapport à l'autre, comprenant des éléments permettant de compenser leur jeu et d'incliner l'une des parties par rapport à l'autre tout en conservant leur fonction.

Sous un de ses aspects, l'invention concerne ainsi un bloc de contact pour appareils électriques haute ou moyenne tension, comprenant deux parties mobiles relativement, en particulier un tube rigide s'insérant dans un évidement muni d'une saillie. Les dimensions des deux parties sont telles qu'un jeu est présent entre elles, de sorte que les axes des deux parties peuvent ne pas être confondus. Ainsi, la barre peut être inclinée par rapport à la deuxième partie, d'un angle avantageusement de l'ordre de 4°, ou inférieur à 7°. Cette inclinaison, équivalente de fait à un degré de liberté supplémentaire, permet de faciliter l'insertion et le retrait de la partie mobile par une plus grande flexibilité quant aux contraintes d'alignement.

Des éléments conducteurs d'électricité et faisant ressort sont présents dans le bloc afin de compenser chacun des jeux entre première et deuxième parties ; deux éléments faisant ressort sont localisés dans le même plan radial pour former une paire. Les éléments faisant ressort sont avantageusement positionnés sur une seule des parties du bloc, notamment de chaque côté de la barre ou face à face dans l'évidement (sur la paroi et la saillie intérieure).

Avantageusement, il y a plusieurs paires d'éléments faisant ressort réparties autour de la périphérie afin de compenser le jeu de façon homogène autour de l'axe ; de préférence, les éléments faisant ressort sont annulaires. Par exemple, les éléments faisant ressort peuvent être des bandes à lamelles ou des ressorts à spires inclinées.

Les éléments faisant ressort, habituellement métalliques, peuvent être associés localement à des supports mécaniques de connexion, par exemple trois pièces en polyamide qui permettent de soutenir la barre si nécessaire, évitant la génération de copeaux due au frottement métal contre métal entre la barre et l'évidement, ou entre la barre et la saillie centrale.

Sous un autre aspect, l'invention concerne l'utilisation de cette faculté de « rotulage » dans un dispositif haute ou moyenne tension pour la connexion de contacts électriques.

L'invention concerne aussi un dispositif de connexion comprenant une barre solidarisée à chaque extrémité à un appareil électrique en un bloc de contact tel que précédemment défini.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
Les figures 1A et 1B représentent des blocs de contact selon l'invention.
Les figures 2A et 2B illustrent un mode de réalisation de l'élément faisant ressort, et la figure 2B montre son intégration dans une paroi.
Les figures 3A et 3B représentent un contact selon un mode préféré de réalisation selon l'invention, respectivement en position alignée et en position de rotulage.
La figure 4 représente une vue de face et une vue de dessus d'un support mécanique selon un mode préféré de l'invention.

### EXPOSÉ DÉTAILLÉ DE MODES DE RÉALISATION PARTICULIERS

Un bloc de contact selon l'invention peut être utilisé principalement pour une connexion entre deux appareils haute ou moyenne tension, auquel cas il est localisé à la périphérie des appareils : de fait, une barre relie deux appareils par l'intermédiaire de deux connexions à chacune de ses extrémités. La connexion, usuellement établie, peut être interrompue, notamment pour des opérations de maintenance : la barre doit alors pouvoir être désolidarisée de l'un des appareils, auquel elle est reliée en un bloc selon l'invention.

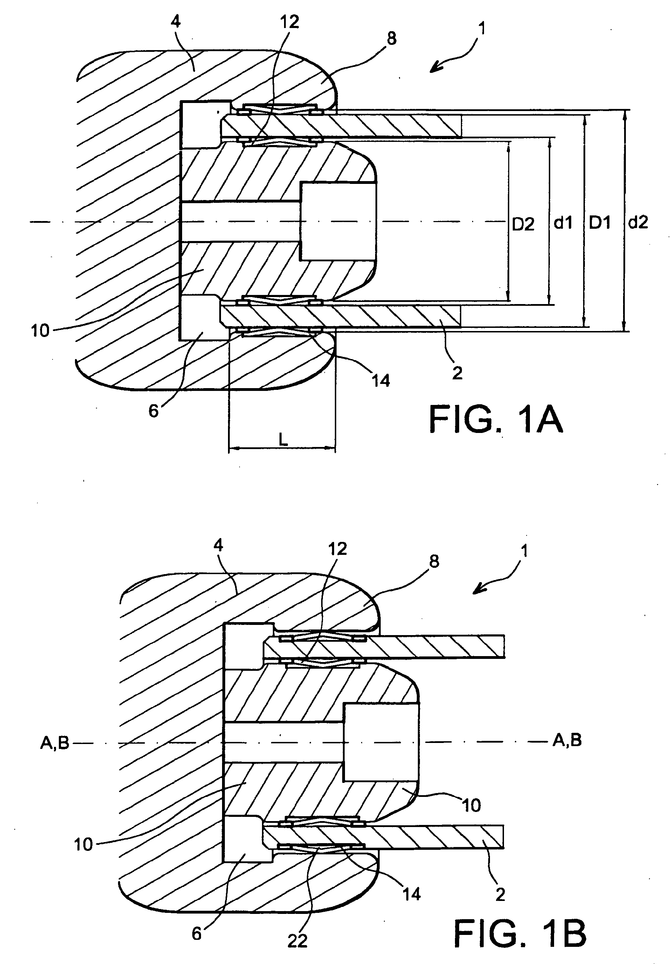

Tel qu'illustré sur les figures 1, un bloc de connexion électrique 1 d'un dispositif haute ou moyenne tension comprend deux parties mobiles l'une par rapport à l'autre. La première partie 2, ou barre, se présente habituellement sous forme d'un tube cylindrique métallique rigide, par exemple en aluminium ou cuivre. De préférence, le tube 2 est de révolution autour d'un axe AA et présente un diamètre externe D1 et un diamètre interne d1, définissant une épaisseur de paroi sensiblement constante, au moins au niveau de la partie d'extrémité s'insérant dans la partie fixe du bloc 1. Par exemple, pour un appareillage électrique haute tension, la barre 2 peut être en aluminium d'épaisseur de 5 à 15 mm, et de diamètre extérieur D1 compris entre 50 et 200 mm, ces dimensions concernant les extrémités de la barre 2 qui peut par exemple également comprendre des protubérances sur sa longueur ; la longueur de cette première partie 2 dépend de l'utilisation, elle varie d'environ 300 mm à 10 m voire 12 mètres ; la masse de chaque barre peut ainsi être de l'ordre de 200 kg.

Lorsque l'appareillage haute ou moyenne tension est assemblé, la première partie 2 est couplée avec un contact qualifié de fixe 4 (bien que représenté pour une extrémité, un tube 2 peut en particulier être relié à chacune de ses extrémités à un contact « fixe » 4 formant ainsi un ensemble dans lequel les premier et deuxième blocs de contact 1 sont tels que leurs premières parties 2 sont reliées et unitaires en une barre). Cette deuxième partie du bloc de connexion 1 comprend habituellement un support solidarisé à un élément de l'appareillage et muni d'un évidement 6 dans lequel s'insère la barre 2. L'évidement 6 est délimité par une paroi, usuellement cylindrique de révolution autour de son axe BB, dont un anneau cylindrique 8 s'étendant sur une longueur L assure un maintien mécanique de la barre 2 ; pour l'exemple ci-dessus, la longueur L peut ainsi être de l'ordre de 50 mm. La paroi est dimensionnée de façon à ce que la barre 2 puisse coulisser aisément, c'est-à-dire que le diamètre interne d2 de la partie de paroi de maintien 8 (la plus étroite) est supérieur au diamètre externe D1 de la première partie 2.

Par ailleurs, un insert central 10 faisant saillie dans l'évidement 6 est par exemple utilisé pour la connexion électrique en tant que telle. L'insert est de forme et taille adaptées pour que la première partie 2 s'emboîte autour, c'est-à-dire que l'insert 10 s'étend symétriquement autour de l'axe BB de la deuxième partie 4 et que le diamètre externe D2 de l'insert 10 est inférieur au diamètre interne d1 de la barre 2.

Il doit être entendu que ce mode de réalisation est préféré et que les alternatives usuelles sont possibles : la connexion électrique peut être effectuée sur les parois de l'évidement 6, éventuellement en l'absence d'insert 10 ; les formes des différents éléments 2, 8, 10 ne sont pas nécessairement cylindriques de révolution mais peuvent comprendre des variantes.

Selon l'invention, délibérément, les diamètres des paroi de maintien 8, insert 10 et barre 2 sont choisis de sorte qu'il y ait un jeu entre chaque élément, si possible identique, à savoir d2 - D1 = d1 - D2 > 0.

Par exemple, pour D1 = 130 mm, on peut avoir 131 mm ≤ d2 ≤ 135 mm. Une autre option est D2 = 75 mm, d1 = 77 mm, D1 = 97 mm, d2 = 99 mm, L = 45 mm.

Afin de maintenir les première et deuxième parties 2, 4 coaxiales, des éléments faisant ressort, notamment conducteurs, sont prévus. Chaque élément faisant ressort est agencé par paire d'éléments 12, 14 se faisant face de chaque côté de la première partie 2, et dans un même plan radial aux axes AA, BB ; une paire d'éléments faisant ressort 12, 14 permet de compenser le jeu entre première et deuxième parties 2, 4.

Bien que les paires d'éléments 12, 14 faisant ressort puissent être localisées sur les deux parties du bloc 1, avantageusement, afin de simplifier la construction et assurer leur position en vis-à-vis sur un même plan, il est préférable que les paires soient localisées sur la même partie. Par exemple, tel qu'illustré sur la figure 1A, la première partie 2 est une barre usuelle, et les paires d'éléments faisant ressort 12, 14 sont positionnées en vis-à-vis sur la paroi cylindrique 8 et l'insert 10. Il est possible, tel qu'illustré en figure 1B, de positionner les deux éléments faisant ressort 12, 14 de chaque paire sur les faces extérieure et intérieure de la paroi tubulaire de la première partie 2.

Les éléments faisant ressort 12, 14 de chaque paire peuvent être identiques ou différents. Ils peuvent s'étendre sur une longueur d'arc variable. Avantageusement, si cette longueur d'arc est inférieure à 180°, une pluralité de paires d'éléments faisant ressort est disposée sur la périphérie du bloc de contact 1 afin que la compensation soit homogène ; par exemple, on peut trouver trois paires à 120° l'une de l'autre, ou quatre à 90°, etc.

Selon un mode de réalisation préféré, au moins un des éléments faisant ressort 12, 14 est annulaire, c'est-à-dire qu'il recouvre toute la périphérie de la partie concernée, et s'étend sur un plan radial à son axe. Le deuxième élément peut s'étendre sur une longueur d'arc seulement (auquel cas il est possible également de trouver plusieurs paires face à face, en « découpant » arbitrairement l'élément annulaire), ou de préférence être également annulaire.

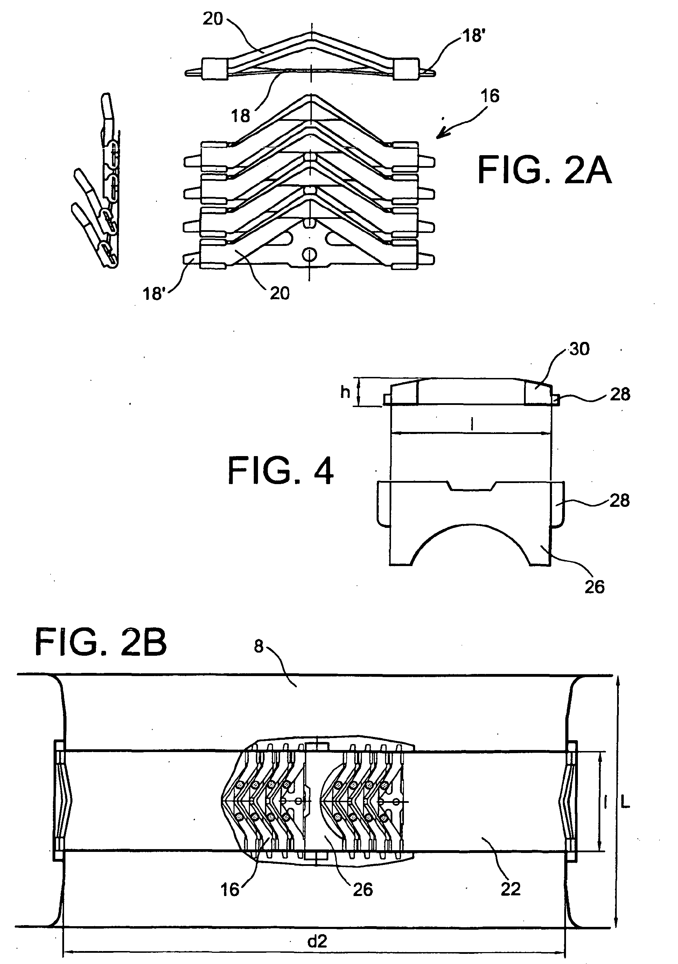

Un mode de réalisation préféré est l'utilisation de bandes à lamelles, telles que décrites par exemple dans le document EP 1 119 077 et illustrées dans la figure 2A. Ces bandes à lamelles 16 comprennent une bande métallique fine 18 d'une largeur de l'ordre de 26 à 30 mm par exemple ; sur cette bande 18 est positionnée une succession de lamelles métalliques de forme triangulaire 20, d'épaisseur inférieure à 5 mm, usuellement faisant saillie du plan de la bande 18 selon un angle maximal inférieur à 90°, et pouvant être abaissées vers la bande 18 en cas de pression. La hauteur de travail des lamelles 20 peut ainsi varier par exemple entre 5 mm de hauteur maximale en position active et 2,5 mm, ou moins. Une telle bande à lamelles 16 est mise en place par insertion dans une gorge 22 qui peut être droite, ou de préférence en T ou en queue d'aronde si les lamelles 20 laissent une partie 18' de la bande libre à chaque extrémité pour son maintien dans la gorge 22 : voir figures 1, 2B. L'inclinaison des lamelles 20 permet ainsi de compenser un jeu variable, par exemple de 2,5 mm, tout en conservant un contact électrique.

Avantageusement, la bande à lamelles 16 est placée dans une gorge 22 localisée de façon centrale par rapport à la paroi de maintien 8 du bloc de connexion (voir aussi figure 2B). Ainsi par exemple, pour un diamètre d2 = 99 mm, les lamelles précédentes sont intégrées dans une gorge 22 de 30 mm au fond et débouchant sur 1 = 26 mm, localisée à 20 mm de chaque côté de la paroi 8 de longueur L = 70 mm. La profondeur de la gorge 22 est adaptée pour obtenir un angle de rotulage satisfaisant, tout en restant dans la plage de fonctionnement des lamelles.

A. la place des bandes à lamelles 16, l'élément faisant ressort 12, 14 peut aussi par exemple être un ressort de type « *canted coil* » (WO 2004/031595), c'est-à-dire un ressort annulaire à spires inclinées, qui peut également être positionné dans une gorge réalisée dans la partie correspondante ; de façon analogue, lors de l'insertion, les spires du ressort s'inclinent plus ou moins pour permettre la connexion.

Quelle que soit la solution adoptée pour les éléments faisant ressort, les blocs de contact selon l'invention permettent ainsi une meilleure tolérance d'usinage, tout en assurant les fonctions électrique et mécanique inhérentes à leur nature.

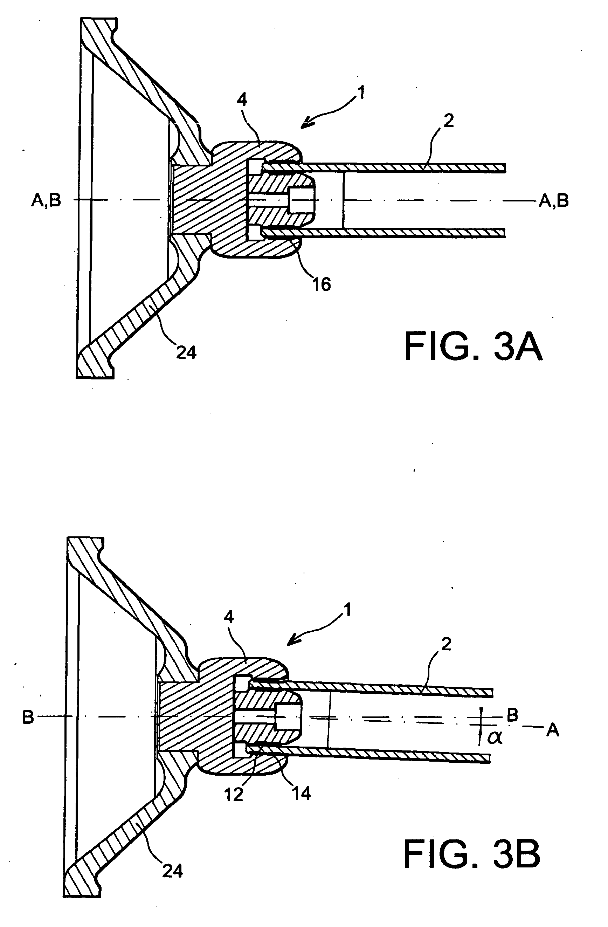

Surtout, grâce au bloc selon l'invention, il est en outre possible, tel qu'illustré sur les figures 3, d'incliner la première partie 2 par rapport à la deuxième partie 4, selon un angle α, alors que le bloc de contact 1 est associé, ici par l'intermédiaire d'un support 24, à un appareillage haute ou moyenne tension. Avantageusement, l'angle α permis varie entre 1 et 7°, par exemple 4°, et les différentes dimensions d1, D1, d2, D2, L sont choisies à cette fin ; l'inclinaison peut être effectuée dans tous les sens autour de l'axe BB. Cette possibilité de « rotulage » permet de réaliser des fonctions de montage et démontage du bloc de connexion plus facilement, et à moindre coût : dans la majorité des cas, il n'est plus nécessaire de disposer de liaisons démontables entre les appareils, constituées en général de viroles télescopiques et de barres démontables.

Le fait de disposer des deux contacts 12, 14 permet de réduire l'encombrement global du bloc de contact 1 tout en conservant des performances élevées de transmission de courant et une possibilité de rotulage pour les opérations de montage/démontage.

Par exemple, le mode de réalisation ci-dessus (avec D1 = 97 mm) permet la réalisation d'une connexion électrique performante pour un courant permanent supérieur à 4000 A et un courant de court-circuit de 63 kA en 3 s, dans un encombrement réduit, ceci avec une possibilité de « rotulage ». Plus généralement, un courant permanent compris entre 2000 A et 6300 A peut être assuré par une barre 2 de masse jusqu'à environ 200 kg solidarisée à deux éléments fixes 4, de préférence de nature identique est supportant chacun jusqu'à une centaine de kilogrammes ; chaque bloc de contact peut supporter un courant de court-circuit de 31,5 kA à 63 kA en 3 s, tout en restant d'encombrement réduit.

Afin d'améliorer la fonction de support mécanique de la première partie 2 par la deuxième partie 4, en particulier dans le cas d'éléments faisant ressort 12, 14 annulaires, et surtout de bande à lamelles 16, il est possible d'insérer des renforts, ou supports, 26 au niveau d'un des éléments faisant ressort d'une paire. Un renfort 26 est ainsi illustré en figure 2B ; il permet, si nécessaire, dé soutenir la barre 2 et évite un frottement métal contre métal entre la barre 2 et l'évidement 6, ou entre la barre 2 et l'insert central 10. Ces supports 26 peuvent être utilisés en particulier pour une barre 2 de masse élevée (certaines peuvent de fait avoir une longueur au moins égale à 10 m ou 12 m). Un support 26 est ainsi inséré dans la gorge 22, grâce à la présence d'une partie de base 28 de longueur et hauteur adaptées à la forme de la gorge 22, c'est-à-dire de fait similaire à la bande 18 de la bande à lamelles 16. A la place des lamelles cependant se trouve une partie de corps 30 plus épaisse qui permet d'incliner une lamelle 20 positionnée de façon adjacente. A titre indicatif, pour la bande précédente, la partie de base 28 est de largeur 30 mm pour une hauteur inférieure à 1,5 mm, et le corps 30 de largeur 1 = 26 mm présente une hauteur maximale h de l'ordre de 3,5 mm.

La forme du support 26 est étudiée en fonction de l'élément faisant ressort. Dans le cas des lamelles 20 mentionnées plus haut, une forme telle qu'illustrée, comprenant une partie rectangulaire de hauteur 13 mm sur la largeur 1 = 26 mm et dont une paroi est évidée par une portion de cercle s'est avérée performante. Les renforts peuvent être en matière plastique, par exemple un polyamide comme le PA6 ; il est souhaitable que la partie pleine soit supérieure à un rectangle 6 × 26 mm².

De préférence, une pluralité de renforts 26, par exemple trois, répartis autour de la circonférence sont utilisés. Ils permettent ainsi de supporter la masse de barres conductrices 2 de grande longueur sans empêcher la fonction de rotulage.

## Revendications

1. Dispositif de connexion électrique **caractérisé en ce qu'**il comprend deux blocs de contact électrique (1) haute et/ou moyenne tension, chaque bloc de contact comprenant une première partie tubulaire (2) s'étendant le long d'un premier axe (AA), une deuxième partie (4) comprenant un évidement cylindrique (6) autour d'un deuxième axe (BB) tel que la première partie (2) peut s'insérer dans l'évidement (6), et des moyens (12, 14) de connexion mobile entre les première et deuxième parties (2, 4) adaptés pour, lorsque la première partie (2) est insérée dans l'évidement (6), permettre une inclinaison d'un angle α entre les premier et deuxième axes (AA, BB) tout autour du deuxième axe (BB) et assurer un contact entre les première et deuxième parties (2, 4), la première partie tubulaire (2) du premier et du deuxième blocs étant une même barre.

2. Dispositif selon la revendication 1 dans lequel l'évidement (6) de la deuxième partie (4) est muni d'un insert (10) y faisant saillie le long du deuxième axe (BB), de sorte que la paroi (8) de l'évidement (6) et l'insert (10) définissent entre eux un espace annulaire dans lequel peut s'insérer la première partie (2), les dimensions externe et interne (D1, d1) de la première partie (2) étant telles qu'il existe un jeu entre la première partie (2) et la paroi (8) de l'évidement (6), et entre la première partie (2) et l'insert (10), les moyens de connexion mobile (12, 14) assurant le contact entre la première partie (2) et la deuxième partie (4) au niveau de chacun de ces jeux.

3. Dispositif selon la revendication 2 dans lequel les moyens de connexion mobile comprennent au moins une paire d'éléments faisant ressort (12, 14) localisés dans les jeux entre les première et deuxième parties (2, 4) sur un même plan radial par rapport à l'un des premier et deuxième axes (AA, BB).

4. Dispositif selon la revendication 3 dans lequel les deux éléments faisant ressort (12, 14) de chaque paire sont solidaires de la première partie (2), localisés de chaque côté, dans le même plan radial au premier axe (AA).

5. Dispositif selon la revendication 3 dans lequel les deux éléments faisant ressort (12, 14) de chaque paire sont solidaires de la deuxième partie (4), localisés dans le même plan radial au deuxième axe (BB) et face à face sur la paroi intérieure (8) de l'évidement (6) et à l'extérieur de l'insert (10).

6. Dispositif selon l'une des revendications 3 à 5 dans lequel le jeu entre les deux parties (2, 4) est tel que l'angle d'inclinaison α maximal est inférieur à 7°, de préférence de l'ordre de 4°.

7. Dispositif selon l'une des revendications 3 à 6 comprenant une pluralité de paires d'éléments faisant ressort (12, 14) localisées sur le même plan, et réparties autour de l'axe (AA, BB).

8. Dispositif selon l'une des revendications 3 à 6 dans lequel les éléments faisant ressort (12, 14) sont annulaires.

9. Dispositif selon la revendication 8 dans lequel au moins un élément faisant ressort est une bande à lamelles (16).

10. Dispositif selon la revendication 8 ou 9 dans lequel au moins un élément faisant ressort est un ressort annulaire à spires inclinées.

11. Dispositif selon l'une des revendications 8 à 10 comprenant au moins un support mécanique de connexion (26).

12. Dispositif selon la revendication 11 comprenant trois supports (26) répartis autour de la circonférence.

13. Dispositif selon l'une des revendications 11 ou 12 dans lequel les supports mécaniques (26) sont en polyamide.

## Claims

1. An electrical connection device comprising two high and/or medium voltage electrical contact blocks (1), each contact block comprising a tubular first portion (2) extending along a first axis (AA), a second portion (4) provided with a cylindrical recess (6) about a second axis (BB) such that the first portion (2) can be inserted into the recess (6), and moving connection means (12, 14) between the first and second portions (2, 4) adapted so that, when the first portion (2) is inserted into the recess (6), they make an inclination of an angle α possible between the first and second axes (AA, BB) all the way aground the second axis (BB)), and they guarantee contact between the first and second portions (2, 4), the first tubular portion (2) of the first and the second blocks being the same bar.

2. A device according to claim 1, wherein the recess (6) of the second portion (4) is provided with an insert (10) that projects into said recess along the second axis (BB), so that the wall (8) of the recess (6) and the insert (10) define between them an annular space into which the first portion (2) can be inserted, the outside and inside dimensions (D1, dl) of the first portion (2) being such that clearance exists between the first portion (2) and the wall (8) of the recess (6) and clearance exists between the first portion (2) and the insert (10), the moving connection means (12, 14) guaranteeing contact between the first portion (2) and the second portion (4) at each of said clearances.

3. A device according to claim 2, wherein the moving connection means comprise at least one pair of spring-forming elements (12, 14) located in the clearances between the first and second portions (2, 4) in the same plane that is radial relative to one of the first and second axes (AA, BB).

4. A device according to claim 3, wherein the two spring-forming elements (12, 14) of each pair are secured to the first portion (2), and are located on either side, in the same plane that is radial to the first axis (AA).

5. A device according to claim 3 wherein the two spring-forming elements (12, 14) of each pair are secured to the second portion (4), are located in the same plane that is radial to the second axis (BB), and face each other on the inside wall (8) of the recess (6) and on the outside of the insert (10).

6. A device according to any one of claims 3 to 5, wherein the clearance between the two portions (2, 4) is such that the maximum angle of inclination α is less than 7°, and preferably of the order of 4°.

7. A device according to any one of claims 3 to 6, having a plurality of pairs of spring-worming elements (12, 14) located in the same plane, and distributed about the axis (AA, BB)).

8. A device according to any one of claims 3 to 6, wherein the spring-forming elements (12, 14) are annular.

9. A device according to claim 8, wherein at least one spring-forming element is a lamella band (16).

10. A device according to claim 8 or 9, wherein at least one spring-forming element is an annular spring having inclined turns.

11. A device according to any of claims 8 to 10, further comprising at least one mechanical connection support (26).

12. A device according to claim 11, comprising three supports (26) distributed aground the circumference.

13. A device according to claim 11 or 12, wherein the mechanical supports (26) are made of polyamide.

## Patentansprüche

1. Elektrische Verbindungsvorrichtung,
**dadurch gekennzeichnet,**
**dass** sie zwei elektrische Hoch- und/oder Mittelspannungs-Kontaktblöcke umfasst, wobei jeder Kontaktblock einen ersten rohrförmigen Teil (2) umfasst, der sich entlang einer ersten Achse (AA) erstreckt, einen zweiten Teil (4), der eine zylindrische Aussparung (6) um eine zweite Achse (BB) herum derart umfasst, dass der erste Teil (2) in die Aussparung (6) eingesetzt werden kann, sowie Mittel (12, 14) für eine bewegliche Verbindung zwischen dem ersten und dem zweiten Teil (2, 4), die dazu ausgelegt sind, dann, wenn der erste Teil (2) in die Aussparung (6) eingesetzt ist, eine Neigung zwischen der ersten und der zweiten Achse (AA, BB) um einen Winkel α um die gesamte zweite Achse (BB) herum zu ermöglichen und einen Kontakt zwischen dem ersten und dem zweiten Teil (2, 4) sicherzustellen, wobei der erste rohrförmige Teil (2) des ersten und des zweiten Blocks ein und dieselbe Stange ist.

2. Vorrichtung nach Anspruch 1, bei dem die Aussparung (6) des zweiten Teils (4) mit einem Einsatz (10) ausgestattet ist, der dort entlang der zweiten Achse (BB) derart vorsteht, dass die Wand (8) der Aussparung (6) und der Einsatz (10) zusammen einen ringförmigen Raum definieren, in den der erste Teil (2) eingesetzt werden kann, wobei die äußeren und inneren Abmessungen (D1, d1) des ersten Teils (2) derart gewählt sind, dass ein Spiel existiert zwischen dem ersten Teil (2) und der Wand (8) der Aussparung (6) sowie zwischen dem ersten Teil (2) und dem Einsatz (10), wobei die Mittel zur beweglichen Verbindung (12, 14) den Kontakt zwischen dem ersten Teil (2) und dem zweiten Teil (4) im Bereich jedes dieser Spiele gewährleisten.

3. Vorrichtung nach Anspruch 2, bei dem die Mittel zur beweglichen Verbindung wenigstens ein Paar von Elementen (12, 14) umfassen, die eine Feder bilden, und in den Spielen zwischen dem ersten und dem zweiten Teil (2, 4) auf ein und derselben Radialebene bezüglich einer der ersten und der zweiten Achsen (AA, BB) lokalisiert sind.

4. Vorrichtung nach Anspruch 3, bei dem die zwei eine Feder bildenden Elemente (12, 14) jedes Paars mit dem ersten Teil (2) auf beiden Seiten lokalisiert in der gleichen Radialebene zur ersten Achse (AA) verbunden sind.

5. Vorrichtung nach Anspruch 3, bei dem die zwei eine Feder bildenden Elemente (12, 14) jedes Paars mit dem zweiten Teil (4) in der gleichen Radialebene zur zweiten Achse (BB) und einander gegenüber auf der Innenwand (8) der Aussparung (6) und außerhalb des Einsatzes (10) lokalisiert verbunden sind.

6. Vorrichtung nach einem der Ansprüche 3 bis 5, bei dem das Spiel zwischen den zwei Teilen (2, 4) derart gewählt ist, dass der maximale Neigungswinkel α kleiner als 7° ist, vorzugsweise in der Größenordung von 4°,

7. Vorrichtung nach einem der Ansprüche 3 bis 6, umfassend eine Mehrzahl von Paaren von Elementen (12, 14) die eine Feder bilden, die in der gleichen Ebene lokalisiert und um die Achse (AA, BB) herum verteilt sind.

8. Vorrichtung nach einem der Ansprüche 3 bis 6, bei dem die Feder bildenden Elemente (12, 14) ringförmig sind.

9. Vorrichtung nach Anspruch 8, bei dem wenigstens ein eine Feder bildendes Element ein Lamellenband (16) ist.

10. Vorrichtung nach Anspruch 8 oder 9, bei dem wenigstens ein eine Feder bildendes Element eine Ringfeder mit geneigten Windungen ist.

11. Vorrichtung nach einem der Ansprüche 8 bis 10, umfassend wenigstens einen mechanischen Verbindungsträger (26).

12. Vorrichtung nach Anspruch 11, umfassend drei Träger (26), die um den Umfang herum verteilt sind.

13. Vorrichtung nach einem der Ansprüche 11 oder 12, bei dem die mechanischen Träger (26) aus Polyamid sind.
